(19) Europäisches Patentamt
European Patent Office
Office européen des brevets

(11) **EP 4 502 087 A1**

(12) **EUROPEAN PATENT APPLICATION**
published in accordance with Art. 153(4) EPC

(43) Date of publication:
**05.02.2025 Bulletin 2025/06**

(21) Application number: **23780933.0**

(22) Date of filing: **30.03.2023**

(51) International Patent Classification (IPC):
***C09D 127/18*** (2006.01)  ***C08F 214/26*** (2006.01)
***C09D 5/03*** (2006.01)  ***C09D 129/10*** (2006.01)

(52) Cooperative Patent Classification (CPC):
**C08F 214/26; C09D 5/03; C09D 127/18;**
**C09D 129/10**

(86) International application number:
**PCT/JP2023/013290**

(87) International publication number:
**WO 2023/190925 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022055218**
**26.08.2022 JP 2022135155**

(71) Applicant: DAIKIN INDUSTRIES, LTD.
**Osaka-shi, Osaka 530-0001 (JP)**

(72) Inventors:
• **ZENKE, Yumi**
  **Osaka-Shi, Osaka 530-0001 (JP)**
• **NAKATANI, Yasukazu**
  **Osaka-Shi, Osaka 530-0001 (JP)**
• **ISAKA, Tadaharu**
  **Osaka-Shi, Osaka 530-0001 (JP)**
• **YAMAMOTO, Yukari**
  **Osaka-Shi, Osaka 530-0001 (JP)**

(74) Representative: Hoffmann Eitle
**Patent- und Rechtsanwälte PartmbB
Arabellastraße 30
81925 München (DE)**

(54) **POWDER COATING MATERIAL, COATING FILM, AND ARTICLE**

(57) There is provided a powder coating material, comprising a copolymer comprising tetrafluoroethylene unit and perfluoro(propyl vinyl ether) unit, wherein the copolymer has a content of perfluoro(propyl vinyl ether) unit of 5.0 to 6.2% by mass with respect to the whole of the monomer units, the copolymer has a melt flow rate at 372°C of 20.0 to 35.0 g/10 min, and the copolymer has the number of functional groups of 100 or less per $10^6$ main-chain carbon atoms.

**EP 4 502 087 A1**

**Description**

TECHNICAL FIELD

The present disclosure relates to a powder coating material, a coating film, and an article.

BACKGROUND ART

Patent Document 1 describes a powder coating material containing a tetrafluoroethylene-based copolymer, wherein the tetrafluoroethylene-based copolymer is a copolymer of 5 to 25% by mass of hexafluoropropylene, 0.01 to 5% by mass of perfluoro(vinyl ether), and tetrafluoroethylene, and the melt flow rate is 1 to 30 g/10 min.

RELATED ART

PATENT DOCUMENT

Patent Document 1: International Publication No. WO 2003/006566

SUMMARY OF THE INVENTION

PROBLEM TO BE SOLVED BY THE INVENTION

An object of the present disclosure is to provide a powder coating material that is capable of providing a coating film having excellent 60°C abrasion resistance, water vapor low permeability, chemical solution low permeability, 230°C tensile creep resistance, and durability against tensile force applied at 180°C.

MEANS FOR SOLVING THE PROBLEM

According to the present disclosure, there is provided a powder coating material comprising a copolymer comprising tetrafluoroethylene unit and perfluoro(propyl vinyl ether) unit, wherein the copolymer has a content of perfluoro(propyl vinyl ether) unit of 5.0 to 6.2% by mass with respect to the whole of the monomer units, the copolymer has a melt flow rate at 372°C of 20.0 to 35.0 g/10 min, and the copolymer has the number of functional groups of 100 or less per $10^6$ main-chain carbon atoms.

EFFECTS OF INVENTION

According to the present disclosure, there can be provided a powder coating material that is capable of providing a coating film having excellent 60°C abrasion resistance, water vapor low permeability, chemical solution low permeability, 230°C tensile creep resistance, and durability against tensile force applied at 180°C.

DESCRIPTION OF EMBODIMENTS

Hereinafter, specific embodiments of the present disclosure will now be described in detail, but the present disclosure is not limited to the following embodiments.

The powder coating material of the present disclosure contains a copolymer containing tetrafluoroethylene (TFE) unit and perfluoro(propyl vinyl ether) (PPVE) unit.

Conventionally, copolymers (PFA) containing TFE unit and PPVE unit are used as components for powder coating materials. As a powder coating material that is capable of providing a coating film having excellent surface smoothness and excellent durability against chemicals and the like, Patent Document 1 has proposed a powder coating material containing a tetrafluoroethylene-based copolymer that is a copolymer of 5 to 25% by mass of hexafluoropropylene, 0.01 to 5% by mass of perfluoro(vinyl ether), and tetrafluoroethylene, and that has a melt flow rate of 1 to 30 g/10 min.

However, conventional powder coating materials, such as the one described in Patent Document 1, have problems that the abrasion resistance, durability against tensile force, and chemical solution low permeability of the resulting coating films are not sufficient. As a result of carefully considering the means for solving such problems, it has been clarified that it is not easy to simultaneously improve the abrasion resistance and durability against tensile force of the resulting coating films, and the water vapor low permeability, chemical solution low permeability, and 230°C tensile creep resistance of the resulting coating films.

It has been found that by suitably regulating the content of PPVE unit, the melt flow rate (MFR), and the number of functional groups of a copolymer containing TFE unit and PPVE unit, and using such a copolymer as a powder coating material, it is possible to obtain a coating film having excellent 60°C abrasion resistance, water vapor low permeability, chemical solution low permeability, 230°C tensile creep resistance, and durability against tensile force applied at 180°C. Therefore, for example, when a coating film is formed by applying the powder coating material of the present disclosure onto an object to be coated, a visually attractive coating film can be easily formed on the object to be coated. Furthermore, not only can it prevent water vapor or chemical solutions from penetrating the coating film and reaching the object to be coated, but the coating film also has excellent abrasion resistance and shape stability. Accordingly, this low permeability can be maintained for a long period of time, whereby the object to be coated can be protected for a long period of time.

The copolymer contained in the powder coating material of the present disclosure is a melt-fabricable fluororesin. Being melt-fabricable means that a polymer can be melted and processed by using a conventional processing device such as an extruder or an injection molding machine.

The content of the PPVE unit of the copolymer is 5.0 to 6.2% by mass with respect to the whole of the monomer units. The content of the PPVE unit of the copolymer is preferably 5.1% by mass or higher, and is preferably 6.1% by mass or lower, more preferably 6.0% by mass or lower, still more preferably 5.8% by mass or lower, and especially preferably 5.7% by mass or lower. An excessively large content of the PPVE unit of the copolymer results in poor water vapor low permeability, chemical solution low permeability, and 230°C tensile creep resistance. An excessively small content of the PPVE unit of the copolymer results in poor 60°C abrasion resistance and durability against tensile force applied at 180°C.

The content of the TFE unit of the copolymer is preferably 93.8% by mass or higher, more preferably 93.9% by mass or higher, still more preferably 94.0% by mass or higher, further still more preferably 94.2% by mass or higher, and especially preferably 94.3% by mass or higher, and is preferably 95.0% by mass or lower, and more preferably 94.9% by mass or lower, with respect to the whole of the monomer units. An excessively small content of the TFE unit of the copolymer possibly results in poor water vapor low permeability, chemical solution low permeability, and 230°C tensile creep resistance. An excessively large content of the TFE unit of the copolymer possibly results in poor 60°C abrasion resistance and durability against tensile force applied at 180°C.

In the present disclosure, the content of each monomer unit in the copolymer is measured by a $^{19}$F-NMR method.

The copolymer can also contain a monomer unit derived from a monomer copolymerizable with TFE and PPVE. In this case, the content of the monomer unit copolymerizable with TFE and PPVE is, with respect to the whole of the monomer units of the copolymer, preferably 0 to 1.2% by mass, more preferably 0.05 to 0.5% by mass, and still more preferably 0.1 to 0.3% by mass. The content of the monomer unit copolymerizable with TFE and PPVE may be 0.1% by mass or lower with respect to the whole of the monomer units of the copolymer.

The monomer copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 20.0 to 35.0 g/10 min. The MFR of the copolymer is preferably 21.0 g/10 min or higher, more preferably 22.0 g/10 min or higher, and still more preferably 23.0 g/10 min or higher, and is preferably 34.0 g/10 min or lower, more preferably 33.0 g/10 min or lower, and still more preferably 32.0 g/10 min or lower. An excessively high MFR of the copolymer results in poor 60°C abrasion resistance and durability against tensile force applied at 180°C. An excessively low MFR of the copolymer results in poor water vapor low permeability and chemical solution low permeability.

In the present disclosure, the MFR is a value obtained as a mass (g/10 min) of a polymer flowing out from a nozzle of 2.1 mm in inner diameter and 8 mm in length per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

The number of functional groups per $10^6$ main-chain carbon atoms of the copolymer is 100 or less. The number of functional groups per $10^6$ main-chain carbon atoms of the copolymer is preferably 80 or less, more preferably 70 or less, still more preferably 60 or less, further still more preferably 50 or less, further still more preferably 40 or less, especially preferably 30 or less, and most preferably less than 20. When the number of functional groups is excessively large, a molded body having excellent chemical solution low permeability and 230°C tensile creep resistance cannot be obtained.

For identification of the kind of the functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the copolymer is calculated according to the following formula (A).

$$N = I \times K/t \cdots (A)$$

I: absorbance
K: correction factor
t: thickness of film (mm)

For reference, the absorption frequency, the molar absorption coefficient and the correction factor for some functional groups are shown in Table 1. Then, the molar absorption coefficients are those determined from FT-IR measurement data of low molecular model compounds.

[Table 1]

Table 1

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of $-CH_2CF_2H$, $-CH_2COF$, $-CH_2COOH$, $-CH_2COOCH_3$ and $-CH_2CONH_2$ are lower by a few tens of kaysers ($cm^{-1}$) than those of $-CF_2H$, $-COF$, $-COOH$ free and $-COOH$ bonded, $-COOCH_3$ and $-CONH_2$ shown in the Table, respectively.

For example, the number of the functional group -COF is the total of the number of a functional group determined from an absorption peak having an absorption frequency of 1,883 $cm^{-1}$ derived from $-CF_2COF$ and the number of a functional group determined from an absorption peak having an absorption frequency of 1,840 $cm^{-1}$ derived from $-CH_2COF$.

The functional groups are ones present on main chain terminals or side chain terminals of the copolymer, and ones present in the main chain or the side chains. The number of functional groups may be the total number of $-CF=CF_2$, $-CF_2H$, $-COF$, $-COOH$, $-COOCH_3$, $-CONH_2$ and $-CH_2OH$.

The functional groups are introduced to the copolymer by, for example, a chain transfer agent or a polymerization initiator used for the production of the copolymer. For example, in the case of using an alcohol as the chain transfer agent, or a peroxide having a structure of $-CH_2OH$ as the polymerization initiator, $-CH_2OH$ is introduced on the main chain terminals of the copolymer. Alternatively, the functional group is introduced on the side chain terminal of the copolymer by polymerizing a monomer having the functional group.

By subjecting a copolymer having such a functional group to a fluorination treatment, a copolymer having the number of functional groups within the above range can be obtained. That is, the copolymer is preferably one that has been subjected to a fluorination treatment. Also, the copolymer preferably has $-CF_3$ terminal groups.

The melting point of the copolymer is preferably 295 to 315°C, more preferably 298°C or higher, still more preferably 300°C or higher, especially preferably 301°C or higher, and most preferably 302°C or higher, and is more preferably 308°C or lower. Due to that the melting point is in the above range, there can be obtained a copolymer that is capable of providing a coating film particularly having even better 60°C abrasion resistance, water vapor low permeability, chemical solution low permeability, 230°C tensile creep resistance, and durability against tensile force applied at 180°C.

In the present disclosure, the melting point can be measured by using a differential scanning calorimeter [DSC].

The average particle size of the powder coating material (copolymer particles) of the present disclosure is preferably 10 to 1,000 $\mu$m. Due to that the average particle size is in the above range, the powder coating material can be easily applied, and a smooth coating film can be obtained. The average particle size is the median diameter and can be measured by using a laser diffraction particle size distribution analyzer.

The apparent density of the powder coating material of the present disclosure is preferably 0.5 to 1.2 g/ml. The apparent density can be measured according to JIS K 6891.

The powder coating material of the present disclosure may contain resins other than the above copolymer. The other resins are not limited as long as they are resins that can be generally used for powder coating materials, and may be either thermoplastic resins or thermosetting resins. The other resins are preferably heat-resistant resins. Examples of the heat-resistant resins include fluororesin other than the copolymer described above, silicone resin, fluorosilicone resin, polyamide resin, polyamideimide resin, polyimide resin, polyester resin, epoxy resin, polyphenylene sulfide resin, phenol resin, acrylic resin, and polyethersulfone resin. These other resins may be used singly or in combination of two or more.

The powder coating material of the present disclosure may contain additives. Additives are not limited as long as they are those added to general powder coating materials. Examples thereof include, for the purpose of coloring, color pigments, such as titanium oxide and cobalt oxide; for the purpose of rust prevention, anti-rust pigments, calcined pigments, and other pigments; for the purpose of reducing shrinkage of the coating film, and in order to increase the hardness of the coating film to improve vulnerability, fillers, such as carbon fibers, glass fibers, glass flakes, and mica; and for the purpose of imparting electric conductivity, electric conductivity-imparting materials, such as conductive carbon. The additives may also be leveling agents, antistatic agents, ultraviolet absorbents, radical scavengers, and the like.

The powder coating material of the present disclosure can be produced, for example, by a production method in which after a copolymer is produced, the copolymer is treated to obtain a powder with a desired shape.

The copolymer can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate, and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an $\omega$-hydroperfluoroalkyl group, or a fluorochloroalkyl group.

Examples of the di[fluoro(or fluorochloro)acyl] peroxides include di($\omega$-hydro-dodecafluoroheptanoyl)peroxide, di($\omega$-hydro-tetradecafluorooctanoyl)peroxide, di($\omega$-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di($\omega$-chloro-hexafluorobutyryl) peroxide, di($\omega$-chloro-decafluorohexanoyl) peroxide, di($\omega$-chloro-tetradecafluorooctanoyl) peroxide, $\omega$)-hydrododecafluoroheptanoyl-$\omega$-hydrohexadecafluorononanoyl peroxide, $\omega$-chloro-hexafluorobutyryl-$\omega$-chloro-decafluorohexanoyl peroxide, $\omega$-hydro-dodecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like; organic peroxides such as disuccinoyl peroxide and diglutaroyl peroxide; and t-butyl permaleate and t-butyl hydroperoxide. A reducing agent such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferable, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride, and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CCIF_2$, $CH_3CCl_2F$, $CF_3CF_2CCl_2H$ and $CF_2ClCF_2CFHCl$; chlorofluoroalkanes such as $CF_2ClCFClCF_2CF_3$ and $CF_3CFClCFClCF_3$; hydrofluoroalkanes such as $CF_3CFHCFHCF_2CF_2CF_3$, $CF_2HCF_2CF_2CF_2CF_2H$ and $CF_3CF_2CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorinated solvent to be used is, from the viewpoint of suspensibility and the economic efficiency, preferably 10 to 100% by mass with respect to the aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, cleaning, and drying the copolymer contained in the aqueous dispersion. Then in the case of obtaining the copolymer as a slurry by the polymerization reaction, the copolymer can be recovered by taking out the slurry from a reaction container, and washing and drying the slurry. The copolymer can be recovered in a shape of powder by the drying.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$ and -CONH$_2$, and thermally relatively stable functional groups, thereof such as -CF$_2$H, can be converted to thermally very stable -CF$_3$. Consequently, the total number (number of functional groups) of -COOH, -COOCH$_3$, -CH$_2$OH, -COF, -CF=CF$_2$, -CONH$_2$ and - CF$_2$H of the copolymer can be easily controlled in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, and halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas) .

The powder coating material can be obtained, for example, in such a manner that after a copolymer is produced as described above, the obtained copolymer is compressed into a sheet shape with a roll, crushed with a crusher, and classified.

The powder coating material is generally applied to an object to be coated, followed by heating and firing to form a film. The coating film obtained in this way can be used for various applications, such as corrosion-resistant lining.

The method for applying the powder coating material is not limited, and examples thereof include spraying, electrostatic spraying, electrostatic spray coating, fluidized bed coating, electrostatic fluidized bed coating, and rotolining.

A coating film formed from the powder coating material is generally formed by applying the powder coating material to an object to be coated, followed by heating and firing to form a film. The temperature of heating and firing the powder coating material applied to the object to be coated is, for example, 295 to 400°C. The time of heating and firing is, for example, 20 to 180 minutes. When the powder coating material is applied and fired multiple times, the time of heating and firing indicates the time for one firing process.

The film thickness of the coating film formed from the powder coating material may suitably be set according to applications, and may be 20 to 10,000 $\mu$m, for example. The film thickness is the film thickness after heating and firing, and may be the film thickness of a coating film obtained by one application, or may be the film thickness of a coating film obtained by two or more applications.

The water vapor permeability of the coating film formed from the powder coating material is preferably 18.0 g·cm/m$^2$ or less. Since the powder coating material contains a copolymer containing a TFE unit and a PPVE unit, in which the content of the PPVE unit, the melt flow rate (MFR), and the number of functional groups are suitably regulated, a coating film having excellent water vapor low permeability can be obtained.

In the present disclosure, the water vapor permeability can be measured under the condition of a temperature of 95°C and for 45 days. Specific measurement of the water vapor permeability can be carried out by a method described in Examples.

The methyl ethyl ketone (MEK) permeability of the coating film formed from the powder coating material is preferably 65.0 mg·cm/m$^2$·day or less. Since the powder coating material contains a copolymer containing a TFE unit and a PPVE unit, in which the content of the PPVE unit, the melt flow rate (MFR), and the number of functional groups are suitably regulated, a coating film having excellent low permeability for a chemical solution such as MEK can be obtained.

In the present disclosure, the MEK permeability can be measured under the condition of a temperature of 60°C and for 45 days. Specific measurement of the MEK permeability can be carried out by a method described in Examples.

The article of the present disclosure comprises a coating film formed from a powder coating material. The article of the present disclosure generally comprises a coating film and an object to be coated, and has the coating film on the surface of the object to be coated.

The object to be coated is not limited, and may be one that is desired to have corrosion resistance. Examples of such an object to be coated include tanks, vessels, towers, valves, pumps, fittings, and other piping materials that are to be provided with a corrosion-resistant lining; and chemical and medical equipment, wafer baskets, coil bobbin tower packings, pharmaceutical valves, pump impellers, and other items that are to be treated with corrosion resistance.

The object to be coated may be, as required, subjected to cleaning, surface treatment such as sandblasting, and primer coating.

So far, embodiments have been described, but it is to be understood that various changes and modifications of patterns and detail may be made without departing from the subject matter and the scope of the claims.

<1> A first aspect of the present disclosure provides a powder coating material, comprising a copolymer comprising tetrafluoroethylene unit and perfluoro(propyl vinyl ether) unit,

wherein the copolymer has a content of perfluoro(propyl vinyl ether) unit of 5.0 to 6.2% by mass with respect to the whole of the monomer units,
the copolymer has a melt flow rate at 372°C of 20.0 to 35.0 g/10 min, and
the copolymer has the number of functional groups of 100 or less per 10$^6$ main-chain carbon atoms.

<2> A second aspect of the present disclosure provides the powder coating material according to the first aspect, wherein the copolymer has a content of perfluoro(propyl vinyl ether) unit of 5.1 to 6.0% by mass with respect to the whole of the monomer units.

<3> A third aspect of the present disclosure provides the powder coating material according to the first or second aspect, wherein the copolymer has a melt flow rate at 372°C of 23.0 to 32.0 g/10 min.

<4> A fourth aspect of the present disclosure provides a coating film formed from the powder coating material according to any one of the first to third aspects.

<5> A fifth aspect of the present disclosure provides an article comprising a coating film formed from the powder coating material according to any one of the first to third aspects.

EXAMPLES

The embodiments of the present disclosure will be described by Examples as follows, but the present disclosure is not limited only to these Examples.

Each numerical value in Examples was measured by the following methods.

(Content of monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle of 2.1 mm in inner diameter and 8 mm in length at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

The fluorinated copolymer powder was formed by cold press to prepare a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that was completely fluorinated and had no functional groups was obtained. From the absorption peak of a specific functional group observed on this difference spectrum, the number N of the functional group per $1\times10^6$ carbon atoms in the sample was calculated according to the following formula (A).

$$N = I\times K/t \cdots (A)$$

I: absorbance

K: correction factor

t: thickness of film (mm)

Regarding the functional groups in the present disclosure, for reference, the absorption frequency, the molar absorption coefficient and the correction factor are shown in Table 2. The molar absorption coefficients are those determined from FT-IR measurement data of low molecular model compounds.

[Table 2]

Table 2

| Functional Group | Absorption Frequency (cm$^{-1}$) | Molar Extinction Coefficient (1/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation); and the melting point was determined from a melting curve peak observed in the second temperature raising step.

Comparative Example 1

51.8 L of pure water was charged in a 174 L-volume autoclave with stirrer; nitrogen replacement was sufficiently carried out; thereafter, 40.9 kg of perfluorocyclobutane, 1.17 kg of perfluoro(propyl vinyl ether) (PPVE) and 4.19 kg of methanol were charged; the temperature in the system was held at 35°C. Then, tetrafluoroethylene (TFE) was introduced under pressure up to 0.64 MPa, and thereafter 0.103 kg of a 50% methanol solution of di-n-propyl peroxydicarbonate was charged to initiate polymerization. Since the pressure in the system decreased along with the progress of the polymerization, TFE was continuously supplied to make the pressure constant, and 0.031 kg of PPVE was added for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 42.2 kg of a powder.

The obtained copolymer powder was compressed into a sheet shape with a roller compactor, and ground to a size of several mm to obtain a flaky copolymer powder.

The obtained flaky copolymer powder was put in a vacuum vibration-type reactor VVD-30 (manufactured by OKAWARA MFG. CO., LTD.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and vacuumizing was carried out once every 1 hour, the reaction was carried out at a temperature of 210°C for 10 hours. After the reaction was finished, the reactor interior was replaced sufficiently by $N_2$ gas to finish the fluorination reaction.

The fluorinated flaky copolymer powder was ground with a hammer mill to obtain a copolymer powder having an average particle size of 20 to 40 μm and an apparent density of 0.60 to 0.70 g/ml.

Comparative Example 2

A fluorinated copolymer powder was obtained as in Comparative Example 1, except for changing the charged amount of PPVE to 4.00 kg, changing the charged amount of methanol to 1.92 kg, changing the charged amount of a 50% methanol solution of di-n-propyl peroxydicarbonate to 0.051 kg, and adding 0.080 kg of PPVE for every 1 kg of TFE supplied, thereby obtaining 44.2 kg of a dry powder.

Comparative Example 3

A fluorinated copolymer powder was obtained as in Comparative Example 1, except for changing the charged amount of PPVE to 2.75 kg, changing the charged amount of methanol to 3.02 kg, and adding 0.058 kg of PPVE for every 1 kg of TFE supplied, thereby obtaining 43.3 kg of a dry powder.

Comparative Example 4

A fluorinated copolymer powder was obtained as in Comparative Example 1, except for changing the charged amount of PPVE to 2.75 kg, changing the charged amount of methanol to 2.44 kg, changing the charged amount of a 50% methanol solution of di-n-propyl peroxydicarbonate to 0.051 kg, and adding 0.058 kg of PPVE for every 1 kg of TFE supplied, thereby obtaining 43.3 kg of a dry powder.

Comparative Example 5

A non-fluorinated copolymer powder was obtained as in Comparative Example 1, except for changing the charged amount of PPVE to 3.01 kg, changing the charged amount of methanol to 4.62 kg, changing the charged amount of a 50% methanol solution of di-n-propyl peroxydicarbonate to 0.051 kg, and adding 0.063 kg of PPVE for every 1 kg of TFE supplied, thereby obtaining 43.5 kg of a dry powder.

Example 1

A fluorinated copolymer powder was obtained as in Comparative Example 1, except for changing the charged amount of PPVE to 2.49 kg, changing the charged amount of methanol to 4.53 kg, changing the charged amount of a 50% methanol solution of di-n-propyl peroxydicarbonate to 0.051 kg, adding 0.054 kg of PPVE for every 1 kg of TFE supplied, changing the heating temperature of the vacuum vibration-type reactor to 160°C, and changing the reaction condition to at a temperature of 160°C and 5 hours, thereby obtaining 43.1 kg of a dry powder.

Example 2

A fluorinated copolymer powder was obtained as in Comparative Example 1, except for changing the charged amount of PPVE to 2.69 kg, changing the charged amount of methanol to 0.22 kg, and adding 0.057 kg of PPVE for every 1 kg of TFE supplied, thereby obtaining 43.2 kg of a dry powder.

Example 3

A fluorinated copolymer powder was obtained as in Comparative Example 1, except for changing the charged amount of PPVE to 2.88 kg, changing the charged amount of methanol to 4.50 kg, changing the charged amount of a 50% methanol solution of di-n-propyl peroxydicarbonate to 0.051 kg, and adding 0.060 kg of PPVE for every 1 kg of TFE supplied, thereby obtaining 43.4 kg of a dry powder.

Example 4

A fluorinated copolymer powder was obtained as in Comparative Example 1, except for changing the charged amount of PPVE to 3.07 kg, changing the charged amount of methanol to 4.38 kg, changing the charged amount of a 50% methanol solution of di-n-propyl peroxydicarbonate to 0.051 kg, and adding 0.064 kg of PPVE for every 1 kg of TFE supplied, thereby obtaining 43.5 kg of a dry powder.

By using the copolymer powders obtained in Examples and Comparative Examples, various physical properties were measured by the methods described above. The results are shown in Table 3.

[Table 3]

Table 3

|  |  | PPVE content (% by mass) | MFR (g/10 min) | Number of functional groups (groups/C$10^6$) | Melting point (°C) |
|---|---|---|---|---|---|
|  | Comparative Example 1 | 3.0 | 29.0 | < 6 | 310 |
|  | Comparative Example 2 | 7.4 | 30.0 | < 6 | 294 |
|  | Comparative Example 3 | 5.5 | 61.0 | <6 | 302 |
|  | Comparative Example 4 | 5.5 | 15.0 | < 6 | 302 |
|  | Comparative Example 5 | 5.9 | 30.0 | 301 | 302 |
|  | Example 1 | 5.1 | 23.0 | 49 | 302 |
|  | Example 2 | 5.4 | 26.0 | <6 | 302 |
|  | Example 3 | 5.7 | 29.0 | < 6 | 302 |
|  | Example 4 | 6.0 | 32.0 | <6 | 302 |

The description of "<6" in Table 3 means that the number of functional groups is less than 6.

(Method for producing coating film for evaluation)

The copolymer powder was applied to a degreased SUS316 substrate (200 mm × 200 mm × 5 mm) with a smooth surface by an electrostatic coating method, then hang vertically in a drying oven, and fired at 380°C for 30 minutes to obtain a coating film with a film thickness of approximately 100 μm. The SUS316 substrate with a coating film was soaked in water together with the coating film, and heated at 95°C for 20 hours, and the coating film peeled from the SUS316 substrate was collected for use as a coating film for evaluation (approximately 0.1 mm in thickness).

(Abrasion test)

A test piece having 10 cm × 10 cm was cut out from the coating film for evaluation. The prepared test piece was fixed to a test bench of a Taber abrasion tester (No. 101 Taber type abrasion tester with an option, manufactured by YASUDA SEIKI SEISAKUSHO, LTD.), and the abrasion test was carried out using the Taber abrasion tester under conditions of a test piece surface temperature of 60°C, a load of 500 g, an abrasion wheel CS-10 (rotationally polished in 20 rotations with an abrasive paper #240), and a rotational speed of 60 rpm. The weight of the test piece after 1,000 rotations was measured, and the same test piece was further subjected to the test of 8,000 rotations, and then the weight of the test piece was measured. The abrasion loss was determined by the following formula.

$$\text{Abrasion loss (mg)} = M1 - M2$$

M1: the weight of the test piece after 1,000 rotations (mg)
M2: the weight of the test piece after 8,000 rotations (mg)

(Water vapor permeability)

A sheet-shape test piece was prepared from the coating film for evaluation. 18 g of water was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with water, and held at a temperature of 95°C for 45 days, and thereafter, the test cup was taken out and allowed to stand at room temperature for 2 hours; thereafter the amount of the mass lost was measured. The water vapor permeability (g·cm/m$^2$) was determined by the following formula.

Water vapor permeability (g·cm/m$^2$) = the amount of the mass lost (g) × the thickness of the sheet-shape test piece (cm) / the permeation area (m$^2$)

(Methyl ethyl ketone (MEK) permeability)

A sheet-shape test piece was prepared from the coating film for evaluation. 10 g of MEK was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with MEK, and held at a temperature of 60°C for 45 days, and thereafter the test cup was taken out and allowed to stand at room temperature for 1 hour; thereafter the amount of the mass lost was measured. The MEK permeability (mg·cm/m$^2$·day) was determined by the following formula.

MEK permeability (mg·cm/m$^2$·day) = [the amount of the mass lost (mg) × the thickness of the sheet-shape test piece (cm)] / [the permeation area (m$^2$)·number of days (day)]

(Tensile creep test)

Tensile creep strain was measured using TMA-7100 manufactured by Hitachi High-Tech Science Corporation. A sample of 2 mm in width and 22 mm in length was prepared from the coating film for evaluation. The sample was attached to the measurement jigs, with the distance between the jigs being 10 mm. A load was applied to the sample such that the cross-sectional load was 2.63 N/mm$^2$, the sample was allowed to stand at 230°C, the displacement (mm) of the length of the sample from 70 minutes after the beginning of the test to 555 minutes after the beginning of the test was measured, and the ratio of the displacement (mm) of the length to the initial sample length (10 mm) (tensile creep strain (%)) was calculated. A sheet, the tensile creep strain (%) of which measured under the condition of a temperature of 230°C and for 555 minutes is small, is hardly elongated even when a tensile load is applied in an extremely high-temperature environment, and has excellent high temperature tensile creep resistance.

(180°C tensile strength)

A dumbbell-shaped test piece was cut out from the coating film for evaluation using a V-shaped dumbbell according to ASTM D1708, and the obtained dumbbell-shaped test piece was used to measure tensile strength at 180°C using an autograph (AG-X 500N manufactured by Shimadzu Corporation) under the condition of 50 mm/min.
A coating film with high 180°C tensile strength is less likely to be broken even when tensile force is applied at a high temperature.

[Table 4]

Table 4

| | 60°C abrasion loss (mg) | Water vapor permeability (g·cm/m$^2$) | MEK permeability (mg·cm /m$^2$·day) | 230°C tensile creep resistance (%) | 180°C tensile strength (MPa) |
|---|---|---|---|---|---|
| Comparative Example 1 | 35.8 | 10.5 | 55.3 | 1.88 | 8.9 |
| Comparative Example 2 | 19.9 | 20.7 | 69.8 | 6.81 | 11.3 |
| Comparative Example 3 | 38.8 | 14.6 | 58.8 | 3.86 | 8.8 |
| Comparative Example 4 | 21.3 | 19.2 | 68.1 | 3.86 | 12.1 |
| Comparative Example 5 | 25.7 | 17.4 | 70.1 | 5.01 | 10.7 |
| Example 1 | 25.7 | 16.1 | 64.7 | 3.44 | 10.9 |
| Example 2 | 25.9 | 16.8 | 63.9 | 3.75 | 10.8 |
| Example 3 | 26.0 | 17.2 | 64.2 | 4.09 | 10.7 |
| Example 4 | 26.0 | 17.5 | 64.6 | 4.47 | 10.6 |

## Claims

1. A powder coating material, comprising a copolymer comprising tetrafluoroethylene unit and perfluoro(propyl vinyl ether) unit,

   wherein the copolymer has a content of perfluoro(propyl vinyl ether) unit of 5.0 to 6.2% by mass with respect to the whole of the monomer units,
   the copolymer has a melt flow rate at 372°C of 20.0 to 35.0 g/10 min, and
   the copolymer has the number of functional groups of 100 or less per 10$^6$ main-chain carbon atoms.

2. The powder coating material according to claim 1,
   wherein the copolymer has a content of perfluoro(propyl vinyl ether) unit of 5.1 to 6.0% by mass with respect to the whole of the monomer units.

3. The powder coating material according to claim 1 or 2, wherein the copolymer has a melt flow rate at 372°C of 23.0 to 32.0 g/10 min.

4. A coating film formed from the powder coating material according to any one of claims 1 to 3.

5. An article comprising a coating film formed from the powder coating material according to any one of claims 1 to 3.

# INTERNATIONAL SEARCH REPORT

| International application No. |
| --- |
| **PCT/JP2023/013290** |

## A. CLASSIFICATION OF SUBJECT MATTER

*C09D 127/18*(2006.01)i; *C08F 214/26*(2006.01)i; *C09D 5/03*(2006.01)i; *C09D 129/10*(2006.01)i
FI:    C09D127/18; C08F214/26; C09D5/03; C09D129/10

According to International Patent Classification (IPC) or to both national classification and IPC

## B. FIELDS SEARCHED

Minimum documentation searched (classification system followed by classification symbols)

C09D; C08F214/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| A | JP 2009-263609 A (DAIKIN IND LTD) 12 November 2009 (2009-11-12) claims 1-4. paragraphs [0032]-[0038], [0071], example 1 | 1-5 |
| A | JP 2005-231080 A (DAIKIN IND LTD) 02 September 2005 (2005-09-02) claim 1, paragraph [0066] | 1-5 |
| A | JP 2011-202033 A (NIPPON FUTSUSO KOGYO KK) 13 October 2011 (2011-10-13) paragraph [0025] | 1-5 |
| A | JP 2016-135862 A (DAIKIN IND LTD) 28 July 2016 (2016-07-28) paragraph [0067] | 1-5 |

☐ Further documents are listed in the continuation of Box C.    ☑ See patent family annex.

| | |
| --- | --- |
| *    Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| **10 May 2023** | **20 June 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2023/013290**

| Patent document cited in search report | | | Publication date (day/month/year) | Patent family member(s) | | Publication date (day/month/year) |
|---|---|---|---|---|---|---|
| JP | 2009-263609 | A | 12 November 2009 | (Family: none) | | |
| JP | 2005-231080 | A | 02 September 2005 | (Family: none) | | |
| JP | 2011-202033 | A | 13 October 2011 | US paragraph [0040] WO EP CN KR | 2013/0004755 2011/118827 2551308 102844387 10-2012-0138744 | A1 A1 A1 A A |
| JP | 2016-135862 | A | 28 July 2016 | US paragraph [0093] WO KR | 2017/0260344 2016/117492 10-2017-0086607 | A1 A1 A |

Form PCT/ISA/210 (patent family annex) (January 2015)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003006566 A